# FASCICULE DE BREVET EUROPEEN

(11) **EP 0 762 615 B1**
(45) Date de publication et mention de la délivrance du brevet: **12.12.2001**
(21) Numéro de dépôt: 96401901.2
(22) Date de dépôt: 05.09.1996
(51) Int. Cl.: H02K 9/06, H02K 15/02

(54) **Alternateur à moyens de ventilation interne perfectionnés, notamment pour véhicule automobile**
Lichtmaschine mit interner Lüftungsvorrichtung, insbesondere für Autos
Alternator with internal cooling means, particularly for automobile vehicles

(30) Priorité: 08.09.1995 FR 9510524
(43) Date de publication de la demande: 12.03.1997
(73) Titulaire: VALEO EQUIPEMENTS ELECTRIQUES MOTEUR, 94000 Créteil (FR)
(72) Inventeur: Cazal, Christian, 91280 St Pierre du Perray (FR); Persyn, Jean-Marie, 77000 Melun (FR)
(74) Mandataire: Le Forestier, Eric

(56) Documents cités:
- DE-A- 3 035 761
- FR-A- 2 494 517
- US-A- 4 128 778
- US-A- 5 329 199
- US-A- 5 429 687

## Description

La présente invention concerne d'une façon générale les alternateurs de véhicules automobiles, et plus particulièrement un perfectionnement à un alternateur dit à ventilation interne, c'est-à-dire comportant deux ventilateurs situés de part et d'autre du rotor de l'alternateur, à l'intérieur du carter de celui-ci.

Lors de la rotation de l'alternateur, les ventilateurs provoquent la circulation d'un flux d'air de refroidissement important à l'intérieur de celui-ci, via des ouies ménagées dans le carter.

Classiquement, ces ventilateurs sont réalisés par découpage et pliage de tôle d'acier et sont rapportés, par exemple par soudage ou sertissage, sur les flancs des roues polaires du rotor ou sur le corps de bobine de ce même rotor.

Il existe également dans l'état de la technique une solution consistant à réaliser des ventilateurs en matière plastique qui sont fixés, par exemple par soudage aux ultrasons, sur la bobine de rotor, ou encore réalisés par surmoulage (voir par exemple US-A-5 329 199).

Ces solutions connues présentent cependant des inconvénients. Tout d'abord, un problème commun à toutes les approches retenues jusqu'à ce jour réside dans la multiplication du nombre de pièces nécessaires pour réaliser le rotor, deux ventilateurs devant être rapportés de part et d'autre de celui-ci.

En outre, dans le cas où les ventilateurs sont en acier, ils peuvent engendrer des pertes de flux provoquées par des fuites entre les ventilateurs et les cornes des roues polaires situées en vis-à-vis.

La présente invention vise à pallier ces inconvénients de l'état de la technique, et en premier lieu à diminuer le nombre de pièces nécessaires à la réalisation du rotor pourvu de ses ventilateurs.

L'invention propose à cet effet un alternateur, du type comprenant un carter dans lequel est monté un arbre, et un rotor monté sur ledit arbre, ledit rotor comprenant des parties de rotor constituées par un corps de bobine, une bobine montée sur ledit corps et deux roues polaires, ainsi qu'au moins un ventilateur prévu sur un flanc du rotor, cet alternateur étant caractérisé en ce que ledit ventilateur au moins prévu est formé d'un seul tenant avec une partie de rotor.

Des aspects préférés, mais non limitatifs, de l'alternateur selon l'invention sont les suivants :
- l'alternateur comprend des pales de ventilateur formées d'un seul tenant avec le corps de bobine.
- l'alternateur comprend des pales de ventilateur formées d'un seul tenant avec une roue polaire.
- le corps de bobine comprend un tambour de bobine bordé par deux joues, des parties intermédiaires porte-pales s'étendant essentiellement axialement à partir d'au moins l'une des joues, et des pales s'étendant vers l'extérieur, lesdites parties intermédiaires étant logées étroitement dans des creux séparant des cornes polaires adjacentes d'une roue polaire adjacente à ladite joue.
- l'alternateur comprend des parties intermédiaires porte-pales et des pales s'étendant à partir des deux joues du corps de bobine, pour former par le corps de bobine des ventilateurs avant et arrière.
- lesdites joues du corps de bobine possèdent des prolongements généralement radiaux précontraints par des faces intérieures des cornes polaires des roues polaires.
- le corps de bobine est réalisé en matière plastique.
- les pales formées d'un seul tenant avec la roue polaire s'étendent respectivement le long de petits bords oblique d'échancrures respectives formées dans la roue polaire pour recevoir les cornes polaires de l'autre roue polaire.

D'autres aspects, buts et avantages de la présente invention apparaîtront mieux à la lecture de la description détaillée suivante de formes de réalisation préférées de celle-ci, donnée à titre d'exemple non limitatif et faite en référence aux dessins annexés, sur lesquels :
la figure 1 est une vue en coupe axiale d'un rotor d'alternateur et de son arbre, selon une première forme de réalisation de l'invention,
la figure 2 est une vue en bout à partir de la droite d'une partie du rotor de la figure 1,
la figure 3 est une vue en bout à partir de la gauche du rotor de la partie de la figure 2,
la figure 4 est une vue en coupe axiale selon la ligne IV-IV de la figure 3,
la figure 5 est une vue en coupe axiale d'un rotor d'alternateur et de son arbre, selon une deuxième forme de réalisation de l'invention,
la figure 6 est une vue en bout à partir de la droite d'une partie du rotor de la figure 5,
la figure 7 est une vue en bout à partir de la gauche de la partie de la figure 6,
la figure 8 est une vue en coupe axiale selon la ligne VIII-VIII de la figure 7, et
la figure 9 est une vue en bout à partir de la droite d'une autre partie du rotor de la figure 5.

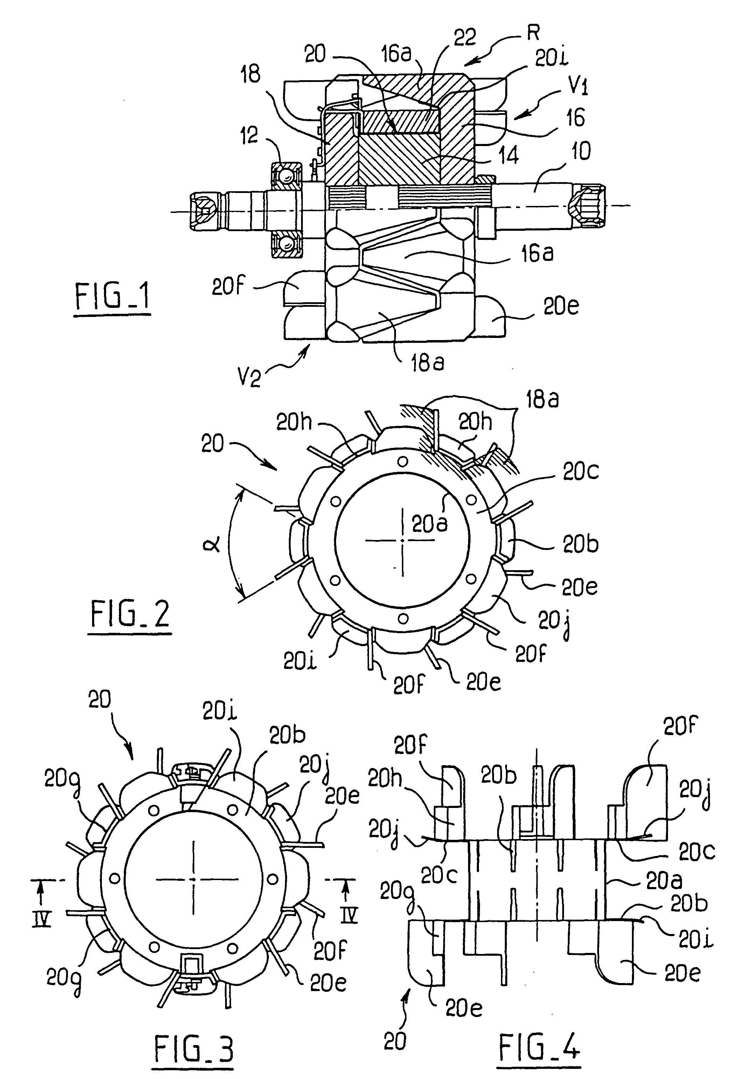

En référence tout d'abord aux figures 1 à 4, on a représenté un ensemble d'arbre et de rotor d'un alternateur selon une première forme de réalisation de la présente invention.

Cet ensemble comprend un arbre 10 monté dans un roulement 12, et un rotor R constitué pour l'essentiel par un noyau de rotor 14, deux roues polaires 16, 18, un corps de bobine 20 et une bobine 22. Les deux roues polaires comprennent des cornes polaires respectives 16a, 18a s'interpénétrant.

Ces éléments, à l'exception du corps de bobine tel qu'on le décrira ci-dessous, sont classiques et ne seront pas décrits en détail.

Selon cette forme de réalisation, le corps de bobine 20, réalisé par exemple en tôle d'acier découpée et pliée, et revêtue d'un vernis isolant, ou en matière plastique moulée, définit d'un seul tenant avec lui deux ventilateurs V1 et V2 destinés à flanquer le rotor de part et d'autre de celui-ci.

A cet effet, et comme le montrent plus particulièrement les figures 1 à 4, ce corps de bobine 20 comprend un tambour de bobine 20a flanqué par deux joues 20b, 20c. A partir de ces joues s'étendent axialement, de façon régulièrement répartie angulairement, des parties intermédiaires porte-pales, respectivement 20g, 20h, aux extrémités desquelles s'étendent avec une légère inclinaison par rapport à la direction radiales, des pales de ventilateurs, respectivement 20e, 20f, appartenant aux ventilateurs V1 et V2. Les parties intermédiaires 20g, 20h passent respectivement dans les creux séparant deux cornes polaires adjacentes 16a, 18a des roues polaires 16, 18 (voir en particulier figure 2, où la partie 20h est nichée dans le creux séparant les cornes polaires 18a adjacentes).

On observera que chacune des joues 20b, 20c est prolongée par une pluralité d'oreilles régulièrement réparties, respectivement 20i, 20j.

Au repos (figure 4), ces prolongements en oreilles sont inclinées légèrement vers l'extérieur du corps de bobine 20 par rapport aux joues 20b, 20c.

On observe également que, lors du montage des roues polaires 16, 18 de part et d'autre de l'ensemble formé du noyau 14, du corps de bobine 20 et de la bobine 22, ces oreilles sont pliées vers l'intérieur par les faces intérieures obliques des cornes polaires 16a, 18a de chaque roue polaire (voir en particulier l'oreille 20i sur la figure 1, sollicitée par la corne polaire 16a).

De la sorte, on assure lors du montage une précontrainte de chaque partie du corps de bobine 20 formant ventilateur, sur toute la périphérie de celui-ci, pour ainsi diminuer les vibrations et la fatigue mécanique lors de la rotation de l'alternateur.

On réalise ainsi un rotor dont la fabrication est significativement simplifiée et dont le poids est sensiblement réduit, du fait que la pièce 20 remplace le corps de bobine et les ventilateurs rapportés qui existent dans les alternateurs conventionnels.

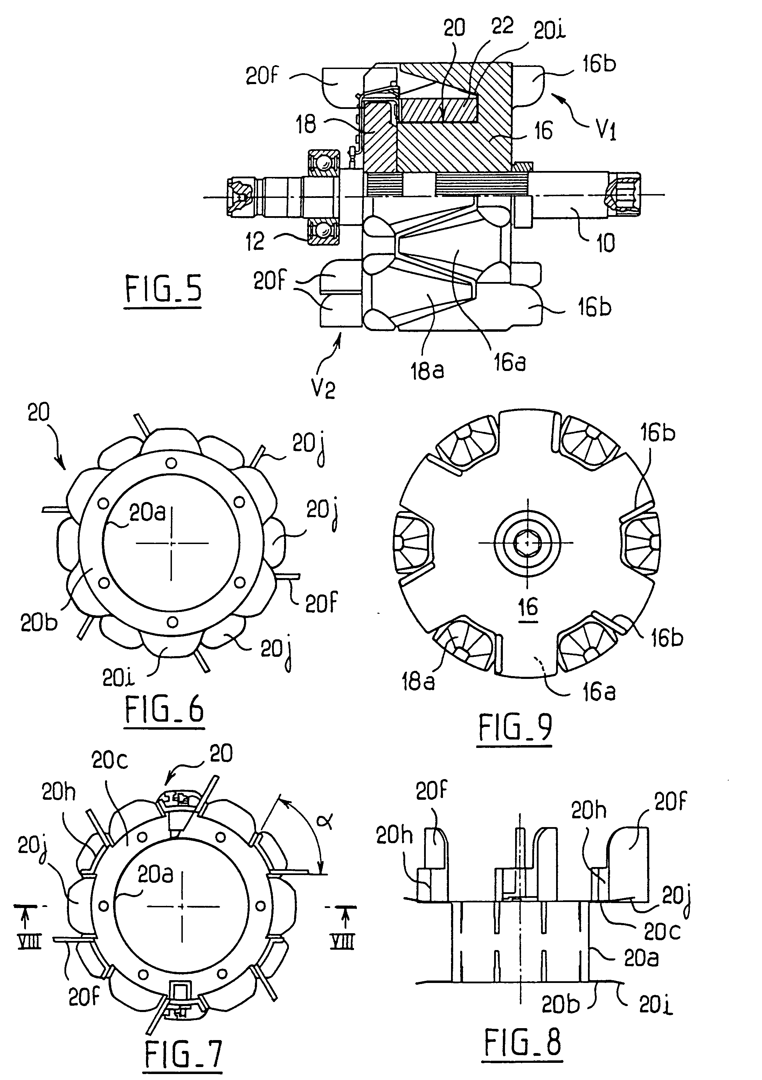

En référence maintenant aux figures 5 à 9, on va décrire une deuxième forme de réalisation de l'invention.

Cette forme de réalisation est semblable à la première quant à l'organisation générale du rotor, à ceci près que les roues polaires 16 et 18 incorporent chacune d'un seul tenant un demi-noyau.

Dans ce cas cependant, le corps de bobine 20 définit seulement le ventilateur gauche V2 (ventilateur dit arrière), tandis que le ventilateur droit V1 est défini par un jeu de pales 16b issues de la roue polaire 16 et d'un seul tenant avec elle.

Plus précisément, le corps de bobine 20 est dans ce cas réalisé de façon analogue à la réalisation des figures 1 à 4, mais ce corps de bobine est dépourvu des parties intermédiaires porte-pales 20g et des pales 20e, ces dernières étant remplacées par les pales 16b issues de la roue polaire 16.

Ces pales 16b, comme illustré sur la figure 9, sont de préférence situées le long d'un petit bord d'une échancrure homologue de forme générale trapézoïdale formée dans la roue polaire 16 pour loger les cornes polaires 18a de l'autre roue polaire 18.

Ces deux formes de réalisation de la présente invention présentent de nombreux avantages. Tout d'abord, on diminue dans les deux cas le nombre de pièces nécessaires à la fabrication, et l'ensemble peut être allégé grâce à l'utilisation d'une matière plastique pour la pièce 20. Dans ce dernier cas, un autre avantage réside en ce que la protection contre la corrosion de la pièce 20 n'est pas nécessaire.

En outre, il devient possible, principalement pour les pales issues du corps de bobine mais également pour celles qui sont issues d'une roue polaire, de leur donner toute forme et toute répartition souhaitée.

Au surplus, grâce en particulier à la précontrainte réalisée sur la pièce 20 par les roues polaires, on obtient un ensemble de rotor d'une excellente rigidité, et les bruits et la fatigue mécanique sont réduits.

On observera également que, pour la deuxième forme de réalisation, les pales issues de la roue polaire permettent éventuellement d'accroître le flux rotorique.

Enfin on notera qu'en donnant aux pales des tailles différentes (voir en particulier la figure 4, où les pales 20f sont légèrement plus grandes que les pales 20e), on peut créer dans le volume de l'alternateur un flux d'air naturel par différence de pression entre l'avant et l'arrière.

## Revendications

1. Alternateur, notamment pour véhicule automobile, du type comprenant un carter dans lequel est monté un arbre (10), et un rotor (R) monté sur ledit arbre, ledit rotor comprenant des parties de rotor constituées par un corps de bobine (20), une bobine montée (22) sur ledit corps et deux roues polaires (16, 18), ainsi qu'au moins un ventilateur (V1, V2) prévu sur un flanc du rotor, cet alternateur étant **caractérisé en ce que** ledit ventilateur au moins prévu est formé d'un seul tenant avec une partie de rotor (20; 16).

2. Alternateur selon la revendication 1, **caractérisé en ce qu'**il comprend des pales de ventilateur (20e, 20f) formées d'un seul tenant avec le corps de bobine (20).

3. Alternateur selon l'une des revendications 1 et 2, **caractérisé en ce qu'**il comprend des pales de ventilateur (16b) formées d'un seul tenant avec une roue polaire (16).

4. Alternateur selon la revendication 2, **caractérisé en ce que** le corps de bobine (20) comprend un tambour de bobine (20a) bordé par deux joues (20b, 20c), des parties intermédiaires porte-pales (20g, 20h) s'étendant essentiellement axialement à partir d'au moins l'une des joues, et des pales (20e, 20f) s'étendant vers l'extérieur, lesdites parties intermédiaires étant logées étroitement dans des creux séparant des cornes polaires adjacentes (16a, 18a) d'une roue polaire (16, 18) adjacente à ladite joue (20b, 20c).

5. Alternateur selon la revendication 4, **caractérisé en ce qu'**il comprend des parties intermédiaires porte-pales (20g, 20h) et des pales (20e, 20f) s'étendant à partir des deux joues (20b, 20c) du corps de bobine, pour former par le corps de bobine des ventilateurs avant et arrière (V1, V2).

6. Alternateur selon l'une des revendications 4 et 5, **caractérisé en ce que** lesdites joues (20b, 20c) du corps de bobine possèdent des prolongements généralement radiaux (20i, 20j) précontraints par des faces intérieures des cornes polaires (16a, 18a) des roues polaires.

7. Alternateur selon l'une des revendications 1 à 6, **caractérisé en ce que** le corps de bobine (20) est réalisé en matière plastique.

8. Alternateur selon la revendication 3, **caractérisé en ce que** les pales (16b) formées d'un seul tenant avec la roue polaire (16) s'étendent respectivement le long de petits bords oblique d'échancrures respectives formées dans la roue polaire pour recevoir les cornes polaires (18a) de l'autre roue polaire (18).

## Patentansprüche

1. Wechselstromgenerator, insbesondere für Kraftfahrzeuge, umfassend ein Gehäuse, in dem eine Welle (10) gelagert ist, und einen auf der besagten Welle gelagerten Läufer (R), wobei der besagte Läufer Läuferteile enthält, die aus einem Wicklungskörper (20), einer an dem besagten Körper angebrachten Wicklung (22) und zwei Polrädern (16, 18) bestehen, sowie wenigstens einen an einer Flanke des Läufers vorgesehenen Lüfter (V1, V2), wobei dieser Wechselstromgenerator **dadurch gekennzeichnet ist, daß** der besagte wenigstens eine vorgesehene Lüfter einstückig an einem Läuferteil (20; 16) angeformt ist.

2. Wechselstromgenerator nach Anspruch 1, **dadurch gekennzeichnet, daß** er Lüfterflügel (20e, 20f) umfaßt, die einstückig am Wicklungskörper (20) angeformt sind.

3. Wechselstromgenerator nach einem der Ansprüche 1 und 2, **dadurch gekennzeichnet, daß** er Lüfterflügel (16b) umfaßt, die einstückig an einem Polrad (16) angeformt sind.

4. Wechselstromgenerator nach Anspruch 2, **dadurch gekennzeichnet, daß** der Wicklungskörper (20) eine von zwei Seitenteilen (20b, 20c) eingefaßte Wicklungstrommel (20a), Flügelträger-Zwischenteile (20g, 20h), die sich in etwa axial von wenigstens einem der Seitenteile aus erstrecken, und Flügel (20e, 20f) umfaßt, die sich nach außen erstrecken, wobei die besagten Zwischenteile eng in Ausnehmungen aufgenommen sind, die benachbarte Polhörner (16a, 18a) eines dem besagten Seitenteil (20b, 20c) zugekehrten Polrads (16, 18) trennen.

5. Wechselstromgenerator nach Anspruch 4, **dadurch gekennzeichnet, daß** er Flügelträger-Zwischenteile (20g, 20h) und Flügel (20e, 20f) umfaßt, die sich von den zwei Seitenteilen (20b, 20c) des Wicklungskörpers aus erstrecken, um durch den Wicklungskörper vordere und hintere Lüfter (V1, V2) zu bilden.

6. Wechselstromgenerator nach einem der Ansprüche 4 und 5, **dadurch gekennzeichnet, daß** die besagten Seitenteile (20b, 20c) des Wicklungskörpers insgesamt radiale Verlängerungen (20i, 20j) besitzen, die durch Innenflächen der Polhörner (16a, 18a) der Polräder vorgespannt sind.

7. Wechselstromgenerator nach einem der Ansprüche 1 bis 6, **dadurch gekennzeichnet, daß** der Wicklungskörper (20) aus Kunststoff ausgeführt ist.

8. Wechselstromgenerator nach Anspruch 3, **dadurch gekennzeichnet, daß** sich die einstückig am Polrad (16) angeformten Flügel (16b) jeweils entlang kurzen Schrägkanten von Aussparungen erstrecken, die im Polrad ausgebildet sind, um die Polhörner (18a) des anderen Polrads (18) aufzunehmen.

## Claims

1. Alternator, notably for a motor vehicle, of the type comprising a casing in which a shaft (10) is mounted, and a rotor (R) mounted on the said shaft, the said rotor comprising rotor parts consisting of a coil body (20), a coil (22) mounted on the said body and two magnet wheels (16, 18), as well as at least one fan (V1, V2) provided on a side of the rotor, this alternator being **characterised in that** the said fan at least provided is formed in a single piece with part of the rotor (20; 16).

2. Alternator according to Claim 1, **characterised in that** it comprises fan blades (20e, 20f) formed in a single piece with the coil body (20).

3. Alternator according to one of Claims 1 and 2, **characterised in that** it comprises fan blades (16b) formed in a single piece with a magnet wheel (16).

4. Alternator according to Claim 2, **characterised in that** the coil body (20) comprises a coil spool (20a) bordered by two cheeks (20b, 20c), intermediate blade-carrier parts (20g, 20h) extending essentially axially from at least one of the cheeks, and blades (20e, 20f) extending outwards, the said intermediate parts being housed closely in hollows separating adjacent pole pieces (16a, 18a) on a magnet wheel (16, 18) adjacent to the said cheek (20b, 20c).

5. Alternator according to Claim 4, **characterised in that** it comprises intermediate blade-carrier parts (20g, 20h) and blades (20e, 20f) extending from two cheeks (20b, 20c) on the coil body, in order to form, through the coil body, front and rear fans (V1, V2).

6. Alternator according to one of Claims 4 and 5, **characterised in that** the said cheeks (20b, 20c) of the coil body have generally radial extensions (20i, 20j) prestressed by internal faces of the pole pieces (16a, 18a) on the magnet wheels.

7. Alternator according to one of Claims 1 to 6, **characterised in that** the coil body (20) is produced from plastics material.

8. Alternator according to Claim 3, **characterised in that** the blades (16b) formed in a single piece with the magnet wheel (16) extend respectively along small oblique edges of respective scallops formed in the magnet wheel in order to receive the pole pieces (18a) on the other magnet wheel (18).
